# EUROPÄISCHE PATENTSCHRIFT

(11) **EP 4 378 024 B1**
(45) Veröffentlichungstag und Bekanntmachung des Hinweises auf die Patenterteilung: **12.02.2025**
(21) Anmeldenummer: 23738639.6
(22) Anmeldetag: 29.06.2023
(51) Int. Cl.: H01M 50/538, H01M 10/04, H01M 50/533, H01M 50/54

(54) **VERFAHREN ZUM FERTIGEN EINER BATTERIEEINZELZELLE**
METHOD FOR PRODUCING AN INDIVIDUAL BATTERY CELL
PROCÉDÉ DE FABRICATION D'UN ÉLÉMENT INDIVIDUEL DE BATTERIE

(30) Priorität: 04.07.2022 DE 102022002419
(43) Veröffentlichungstag der Anmeldung: 05.06.2024
(73) Patentinhaber: Mercedes-Benz Group AG, 70372 Stuttgart (DE)
(72) Erfinder: DUBBE, Hendrik, 70619 Stuttgart (DE); KLEIN, Malte Henrik, 70597 Stuttgart (DE)
(74) Vertreter: Novagraaf Group
(86) Internationale Anmeldenummer: PCT/EP2023/067890
(87) Internationale Veröffentlichungsnummer: WO 2024/008555

(56) Entgegenhaltungen:
- WO-A2-2010/030606
- DE-B4- 102015 209 719

## Beschreibung

Die Erfindung betrifft ein Verfahren zum Fertigen einer Batterieeinzelzelle nach der im Oberbegriff von Anspruch 1 näher definierten Art

Batterieeinzelzellen, beispielsweise in Lithium-Ionen-Technologie sind aus dem Stand der Technik grundlegend bekannt. Sie bestehen im Wesentlichen aus einem Gehäuse und in diesem Gehäuse angeordneten elektrochemisch aktiven Materialien. Typischerweise handelt es sich dabei um einen Stapel oder gegebenenfalls auch einen Wickel von Kathoden, Anoden und Separatoren, welche in das Gehäuse eingebracht und mit Elektrolyt getränkt werden. Abschließend wird das Gehäuse verschlossen.

Die Kontaktierung der Elektroden erfolgt typischerweise über über den Stapel oder Wickel überstehende Ableiterfahnen, wobei typischerweise auf der einen Seite die Ableiterfahnen der Kathode und auf der anderen Seite die Ableiterfahnen der Anode überstehen. Je nach Ausgestaltung des Gehäuses können beispielsweise die Ableiterfahnen der Anoden miteinander verschweißt werden und die der Kathode gegen ein metallisch leitendes Gehäuse gepresst werden oder Ähnliches. Selbstverständlich lässt sich dies auch andersherum realisieren oder es lassen sich beide Elektroden entsprechend verschweißen.

Aus dem allgemeinen Stand der Technik ist es dabei bekannt, dass beim Verschweißen die einzelnen überstehenden Ableiterfahnen mit einem Stromsammler verschweißt werden, welcher dann mit einem Zelldeckel verschweißt wird, beispielsweise vor dem Verschließen der Batterieeinzelzelle, bei welchem der Zelldeckel insbesondere mit dem Gehäuse verschweißt werden kann. Dies ist vergleichsweise aufwändig, benötigt mehrere Schweißnähte und vergleichsweise viel Bauraum durch den zusätzlichen Stromsammler in der Batterieeinzelzelle. Jede Schweißnaht belastet dabei die Elektrochemie der Zelle thermisch, was ein Nachteil ist. Je mehr Material dabei aufgeschmolzen werden muss, desto kritischer kann dies sein.

Aus der DE 10 2015 209 719 B4 ist es außerdem bekannt, die Ableiterfahnen ohne einen Stromsammler zu verschweißen. Sie werden dafür mit einem Niederhalter mit einem elastischen Element niedergehalten und über ein Ultraschallschweißverfahren unmittelbar miteinander verschweißt. Die auf der einen Seite des Zellstapels herausstehenden Ableiterfahnen der einen Elektrode und die aus der anderen Seite des Zellstapels herausstehenden Ableiterfahnen der anderen Elektrode können so jeweils unmittelbar miteinander und mit den entsprechenden Stapeln von benachbarten Elektroden verschweißt werden.

Aus der US 2011/0206976 A1 ist eine Elektrodenanordnung für eine Batteriezelle bekannt. Die Ableiterfahnen der einzelnen Elektroden werden dabei zusammen mit einem Ableiter der Batterieeinzelzelle aufgewickelt und dabei jeweils mit einem Anodenableiter bzw. Kathdenableiter für alle entsprechenden Elektroden innerhalb der Batterieeinzelzelle verbunden, z.B. verschweißt. Dieser kann dann beispielsweise isoliert aus einem Gehäuse herausgeführt werden.

Die WO 2010/030606 A2 beschreibt eine elektrochemische Zelle mit wenigstens einer Elektrode. Das über das Aktivmaterial überstehende Ende jeder einzelnen Elektrodefolie wird dabei aufgewickelt, um die Kontaktierung aller gleichpoligen Elektroden der Batterieeinzelzelle zu erleichtern.

Die Aufgabe der hier vorliegenden Erfindung besteht nun darin, ein Verfahren zum Fertigen einer Batteriezelle anzugeben, welches den aus dem allgemeinen Stand der Technik bekannten Aufbau weiter vereinfacht und dennoch eine sichere und zuverlässige elektrische Kontaktierung der Ableiterfahnen gewährleistet.

Erfindungsgemäß wird diese Aufgabe durch das Verfahren mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Das erfindungsgemäße Verfahren sieht es vor, dass die Ableiterfahnen, so wie es aus dem Stand der Technik bekannt ist, verschweißt werden. Erfindungsgemäß werden sie dazu kompaktiert und auf ihrer dem Stapel oder Wickel zugewandten Seite durch dieses Verschweißen, welches gemäß einer sehr vorteilhaften Ausgestaltung als Ultraschallschweißen ausgebildet sein kann, zuerst geheftet, um zu verhindern, dass sich ihre Position innerhalb des Stapels oder Wickels verändert und einzelne Elektroden oder Separatoren bei der Herstellung aus dem Stapel oder Wickel gezogen werden. Die so über das Ultraschallschweißen gehefteten Ableiterfahnen werden dann an ihrem dem Stapel oder Wickel abgewandten Ende von einer Schweißelektrode gegriffen und in Richtung des Stapels oder Wickels um diese Schweißelektrode aufgewickelt. Abschließend wird dann ein Zelldeckel der Batterieeinzelzelle mit den aufgewickelten Ableiterfahnen verschweißt. Auf die Verwendung eines zusätzlichen Stromsammlers, mit welchem die einzelnen Ableiterfahnen verschweißt sind, wird hier also verzichtet. Anders als im oben genannten Stand der Technik bleiben die gehefteten Ableiterfahnen dabei auch nicht unbearbeitet, da diese dann sehr dünn und anfällig bei mechanischer Belastung sind und sehr schnell einreißen könnten, was die elektrische Leistungsfähigkeit des Aufbaus massiv beeinträchtigen würde.

Vielmehr werden bei dem erfindungsgemäßen Verfahren die Ableiterfahnen in Richtung des Stapels aufgewickelt und zwar auf einer im Inneren dieses Wickels befindlichen Schweißelektrode. Der Aufbau kann dann durch den Zelldeckel direkt, also ohne zwischengeschalteten Stromsammler ergänzt werden, indem dieser Zelldeckel mit den aufgerollten beziehungsweise aufgewickelten Ableiterfolien verschweißt wird. Diese bilden dann einen mit dem Zelldeckel verschweißten Wickel, was einen mechanisch stabilen Aufbau ergibt, welcher die beim Schweißen anfallende Wärme nur teilweise an den Stapel bzw. Wickel weiterleitet. Insbesondere wird ein großer Teil der Wärme durch die Schweißelektrode abgeführt.

Gemäß einer weiteren sehr günstigen Ausgestaltung des erfindungsgemäßen Verfahrens kann es dabei vorgesehen sein, dass die Ableiterfolien mittels einer Nut in der Schweißelektrode gegriffen werden. Eine solche Nut kann beispielsweise in einer eckigen oder runden Schweißelektrode vorgesehen sein. Diese wird so auf dem Stapel der zusammengehefteten Ableiterfahnen positioniert, dass dessen dem Stapel oder Wickel abgewandtes Ende, welches beim oder nach dem Heften kompaktiert worden ist, in dieser Nut zu liegen kommt. Durch ein Eindrehen der Schweißelektrode wird dieser kompaktierte Stapel der Ableiterfolien nun um diese Schweißelektrode herum aufgewickelt. Gemäß einer weiteren sehr günstigen Ausgestaltung wird die Schweißelektrode dann nach dem Aufschweißen der aufgewickelten Ableiterfolien auf den Zelldeckel aus den aufgewickelten Ableiterfolien entfernt, sodass eine hohle in sich jedoch durch die Mehrlagigkeit sehr stabile Rolle verbleibt, deren einzelne Schichten auf der dem Zelldeckel zugewandten Seite linienförmig entlang der zentralen Achse der Schweißelektrode miteinander und mit dem Zelldeckel verschweißt sind.

Dieser sehr stabile Aufbau aus Zelldeckel und Stapel oder Wickel kann dann einfach und effizient gehandhabt und in ein Gehäuse eingebracht werden, wonach der Zelldeckel vorzugsweise über Laserschweißen, mit dem Gehäuse verschweißt wird.

Nicht nur das Heften der Ableiterfolien kann dabei mittels Ultraschallschweißen erfolgen, sondern gemäß einer sehr vorteilhaften Ausgestaltung des erfindungsgemäßen Verfahrens kann auch auf das Aufschweißen der aufgewickelten Ableiterfolien auf den Zelldeckel beziehungsweise des Zelldeckels auf die aufgewickelten Ableiterfolien mittels Ultraschallschweißen erfolgen. Lediglich das Anschweißen des Deckels an dem Gehäuse lässt sich vorzugsweise über Laserschweißen effizienter umsetzen.

Eine weitere sehr günstige Ausgestaltung des Verfahrens zum Herstellen der erfindungsgemäßen Batterieeinzelzelle sieht es dabei vor, dass das Heften der Ableiterfolien in Stapelrichtung beziehungsweise quer zur Wickelrichtung in ungefähr mittiger Höhe erfolgt. Die Ableiterfolien werden also nicht, wie es heute weitgehend üblich ist, auf einer Seite des Stapels gesammelt und dort kompaktiert und verschweißt, sondern sie werden mittig zusammengeführt, um sie möglichst nah an dem Zellstapel, mit möglichst wenig Weg der einzelnen Ableiterfolien bis zur Schweißnaht untereinander zu heften.

Eine nach dem erfindungsgemäßen Verfahren hergestellte Batterieeinzelzelle sieht nun einen Stapel oder Wickel von Kathoden, Anoden und Separatoren vor, welcher in einem mit einem Zelldeckel verschlossenen Zellgehäuse angeordnet ist. Dabei ist es so, dass die Ableiterfahnen von zumindest einer der Elektroden über den Stapel oder Wickel überstehen und in diesem Bereich aufgerollt und mit dem Zelldeckel verschweißt ausgebildet sind. Der Zelldeckel kann dabei gemäß einer vorteilhaften Weiterbildung der erfindungsgemäßen Batterieeinzelzelle seinerseits mit dem Gehäuse verschweißt sein.

Vorteilhafte Ausgestaltungen und Weiterbildungen des erfindungsgemäßen Verfahrens sowie der damit hergestellten Batterieeinzelzelle ergeben sich auch aus dem Ausführungsbeispiel, welches nachfolgend unter Bezugnahme auf die Figuren näher beschrieben ist.

Dabei zeigen:
- Fig. 1: die Herstellung einer Batterieeinzelzelle in einem ersten Verfahrensschritt mit einem schematisch angedeuteten Zellstapel;
- Fig. 2: eine Darstellung analog zu der in Fig. 1 in einem zweiten Verfahrensschritt;
- Fig. 3: eine Darstellung analog zu der in Fig. 1 und Fig. 2 in einem dritten Verfahrensschritt; und
- Fig. 4: die Komplettierung der Batterieeinzelzelle in einem abschließenden Verfahrensschritt.

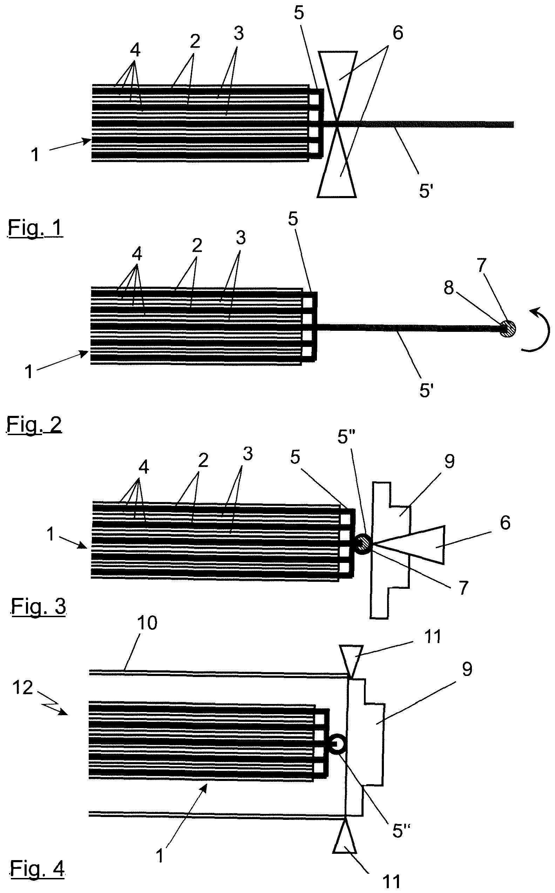

In der Darstellung der Figur 1 ist ein Ausschnitt aus einem Stapel 1 zu erkennen. Dieser Stapel 1 besteht aus unterschiedlichen Elektroden 2, 3, also den Anoden und den Kathoden. Dazwischen sind jeweils Separatoren 4 angeordnet. Im hier dargestellten Ausführungsbeispiel sind die Kathoden auf einer Aluminiumfolie geträgert, welche hier mit dicker durchgezogener schwarzer Linie dargestellt ist. Die Enden dieser Kathoden 2 stehen als Ableiterfahnen 5 quer zur Stapelrichtung S seitlich über den Stapel 1 über. Sie werden in diesem Bereich zusammengefasst, wobei in der Figur lediglich fünf einzelne Kathoden 2 dargestellt sind, um die Darstellung entsprechend zu vereinfachen. Die Ableiterfahnen 5 werden dabei mittig bezogen auf die Höhe des Stapels 1 in Stapelrichtung S zusammengefasst und sind in dem mit 5' bezeichneten Bereich kompaktiert. Auf der dem Stapel 1 zugewandten Seite dieser kompaktierten Ableiterfahnen 5 wird nun mittels eines Ultraschallschweißgeräts 6 eine Schweißnaht oder einzelne Schweißpunkte entlang der in die Tiefe des Blatts in der Darstellung der Figur 1 ragenden Breite des Stapels 1 gesetzt, um die kompaktierten Ableiterfahnen 5' zu verbinden und im weiteren Verlauf ein Herausziehen der Elektroden 2, 3 oder Separatoren 4 aus dem Stapel 1 zuverlässig zu verhindern.

Das dem Stapel 1 abgewandte Ende der kompaktierten Ableiterfahnen 5' wird nun von einer Schweißelektrode 7, welche beispielsweise als stabförmige Elektrode mit einer Nut 8 ausgebildet ist, gegriffen, indem die kompaktierten Ableiterfahnen 5' in diese Nut eingeführt werden. Die Schweißelektrode 7 wird dann gemäß dem Pfeil in Figur 2 in Richtung des Stapels 1 aufgewickelt, sodass eine Rolle 5"aus mehreren spiralförmig verlaufenden Lagen der kompaktierten Ableiterfahnen 5' entsteht. Diese Rolle 5" mit der darin angeordneten Schweißelektrode 7 wird nun mit einem Zelldeckel 9 in Kontakt gebracht und durch das Material dieses Zelldeckels 9 hindurch mit ebendiesem verschweißt. Auch dieser Vorgang kann wieder als Ultraschallschweißen ausgeführt sein, weshalb die symbolische Darstellung des Verschweißens wiederum mit dem Bezugszeichen 6 versehen ist. Die aufgewickelten Ableiterfahnen, welche nach dem Aufwickeln zu der Rolle hier mit 5" bezeichnet sind, bilden dabei einen sehr kompakten Aufbau, welcher effizient und prozesssicher einfach mit dem Zelldeckel 9 verschweißt werden kann.

Die Schweißelektrode 7 wird dann seitlich herausgezogen und es entsteht ein sehr robuster Aufbau aus Stapel 1 und Zelldeckel 9, welcher dann beispielsweise in ein bereits mit Elektrolyt gefülltes Gehäuse oder nach dem Tränken des Stapels 1 in ein solches Gehäuse 10, wie es in der Darstellung der Figur 4 zu erkennen ist, eingebracht werden kann. Der Aufbau ist auch hier rein schematisch dargestellt, typischerweise wird der Zellstapel selbstverständlich mehr Platz innerhalb des Gehäuses nutzen. Der Zelldeckel 9 kann dann beispielsweise über Laserschweißen, was hier durch die beiden Dreiecke 11 entsprechend angedeutet ist, mit dem Gehäuse 10 verschweißt werden.

Grundsätzlich lässt sich das beschriebene Verfahren und die nach diesem Verfahren erhältliche Batterieeinzelzelle 12, welche in einem Teilausschnitt in der Darstellung der Figur 4 zu erkennen ist, sowohl für runde als auch prismatische Gehäuse 9 entsprechend einsetzen. Insbesondere eignet sie sich für das elektrische Kontaktieren eines Stapels 1 mit dem Zelldeckel und damit bevorzugt für einen Aufbau mit prismatischem Gehäuse 10.

Gegenüber dem Stand der Technik wird hier Material und Fertigungsaufwand eingespart, da das zusätzliche Verschweißen mit dem Stromsammler, wie es aus dem allgemeinen Stand der Technik bekannt ist, entfällt. Gleichzeitig wird an dem bewährten Konzept der eigenständigen Batterieeinzelzellen 12, welche dann extern elektrisch kontaktiert werden, festgehalten, was entscheidende Vorteile hinsichtlich der Skalierbarkeit und der Sicherheit bietet, die so im oben zuletzt genannten Stand der Technik nicht realisierbar ist.

In den Darstellungen der Figuren sind dabei jeweils nur Teile des Stapels 1 bzw. der Batterieeinzelzelle 12 zu erkennen. Die fehlende Seite kann identisch ausgebildet werden oder auch in jeder anderen an sich bekannten Art und Weise. Dies betrifft sowohl das Gehäuse als auch die Kontaktierung der jeweils anderen Elektrode 3, hier also der Anode.

## Patentansprüche

1. Verfahren zum Fertigen einer Batterieeinzelzelle (12) mit einem Stapel (1) oder Wickel von Elektroden (2, 3) und Separatoren (4), wobei zumindest eine der Elektroden (2, 3) seitlich in eine Richtung über den Stapel (1) oder Wickel überstehende Ableiterfahnen (5) aufweist, welche miteinander verschweißt werden, **dadurch gekennzeichnet, dass**
die Ableiterfahnen (5) kompaktiert und auf ihrer dem Stapel (1) oder Wickel zugewandten Seite durch Verschweißen geheftet werden, wonach die kompaktierten und verschweißten Ableiterfahnen (5') an ihrem dem Stapel (1) oder Wickel abgewandten Seite von einer Schweißelektrode (7) gegriffen und in Richtung des Stapels (1) oder Wickels um die Schweißelektrode (7) aufgewickelt werden, und wonach ein Zelldeckel (9) der Batterieeinzelzelle (12) mit den aufgewickelten Ableiterfahnen (5') verschweißt wird.

2. Verfahren nach Anspruch 1,
**dadurch gekennzeichnet, dass**
die kompaktierten und verschweißten Ableiterfahnen (5') mittels einer Nut (8) in der Schweißelektrode (7) gegriffen werden.

3. Verfahren nach Anspruch 1 oder 2,
**dadurch gekennzeichnet, dass**
die Schweißelektrode (7) nach dem Verschweißen der aufgewickelten Ableiterfahnen (5") mit dem Zelldeckel (9) aus den aufgewickelten Ableiterfahnen (5") entfernt wird.

4. Verfahren nach Anspruch 1, 2 oder 3,
**dadurch gekennzeichnet, dass**
der Stapel (1) oder Wickel mit dem angeschweißten Zelldeckel (9) in ein Gehäuse (10) eingebracht wird, wonach der Zelldeckel (9) mit dem Gehäuse (10) verschweißt wird.

5. Verfahren nach Anspruch 4,
**dadurch gekennzeichnet, dass**
zum Verschweißen des Zelldeckels (9) mit dem Gehäuse (10) ein Laserschweißen eingesetzt wird.

6. Verfahren nach einem der Ansprüche 1 bis 5,
**dadurch gekennzeichnet, dass**
die Ableiterfahnen (5) zum Heften mittels Ultraschallschweißen verschweißt werden.

7. Verfahren nach einem der Ansprüche 1 bis 6,
**dadurch gekennzeichnet, dass**
die aufgewickelten Ableiterfahnen (5") mit dem Zelldeckel (9) mittels Ultraschallschweißen verschweißt werden.

8. Verfahren nach einem der Ansprüche 1 bis 7,
**dadurch gekennzeichnet, dass**
das Heften der Ableiterfahnen (5) in Stapelrichtung (S) oder quer zur Wickelrichtung auf in etwa mittiger Höhe erfolgt.

## Claims

1. Method for producing an individual battery cell (12) having a stack (1) or winding of electrodes (2, 3) and separators (4), at least one of the electrodes (2, 3) comprising collector tabs (5) which project laterally in one direction beyond the stack (1) or winding and are welded to one another, **characterized in that**
the collector tabs (5) are compacted and attached by welding on their side facing the stack (1) or winding, after which the compacted and welded collector tabs (5') are gripped by a welding electrode (7) on their side facing away from the stack (1) or winding and wound around the welding electrode (7) in the direction of the stack (1) or winding, and after which a cell cover (9) of the individual battery cell (12) is welded to the wound collector tabs (5').

2. Method according to claim 1,
**characterized in that**
the compacted and welded collector tabs (5') are gripped by means of a groove (8) in the welding electrode (7).

3. Method according to either claim 1 or claim 2,
**characterized in that**
the welding electrode (7) is removed from the wound collector tabs (5") after the wound collector tabs (5") have been welded to the cell cover (9).

4. Method according to claim 1, 2 or 3,
**characterized in that**
the stack (1) or winding, together with the cell cover (9) welded thereto, is introduced into a housing (10), after which the cell cover (9) is welded to the housing (10).

5. Method according to claim 4,
**characterized in that**
laser welding is used to weld the cell cover (9) to the housing (10).

6. Method according to any of claims 1 to 5,
**characterized in that**
the collector tabs (5) are welded for attachment by means of ultrasonic welding.

7. Method according to any of claims 1 to 6,
**characterized in that**
the wound collector tabs (5") are welded to the cell cover (9) by means of ultrasonic welding.

8. Method according to any of claims 1 to 7,
**characterized in that**
the collector tabs (5) are attached at approximately central height in the stacking direction (S) or transversely to the winding direction.

## Revendications

1. Procédé permettant de fabriquer un élément individuel de batterie (12) comportant un empilement (1) ou un enroulement d'électrodes (2, 3) et de séparateurs (4), dans lequel au moins l'une des électrodes (2, 3) présente des pattes de parafoudre (5) dépassant latéralement dans une direction au-delà de l'empilement (1) ou de l'enroulement, lesquelles pattes sont soudées entre elles, **caractérisé en ce que**
les pattes de parafoudre (5) sont compactées et agrafées par soudage sur leur côté tourné vers l'empilement (1) ou l'enroulement, après quoi les pattes de parafoudre (5') compactées et soudées sont saisies par une électrode de soudage (7) sur leur côté opposé à l'empilement (1) ou à l'enroulement et enroulées autour de l'électrode de soudage (7) en direction de l'empilement (1) ou de l'enroulement, et après quoi un couvercle d'élément (9) de l'élément individuel de batterie (12) est soudé aux pattes de parafoudre (5') enroulées.

2. Procédé selon la revendication 1,
**caractérisé en ce que**
les pattes de parafoudre (5') compactées et soudées sont saisies à l'aide d'une rainure (8) dans l'électrode de soudage (7).

3. Procédé selon la revendication 1 ou 2,
**caractérisé en ce que**
l'électrode de soudage (7) est retirée des pattes de parafoudre (5") enroulées après le soudage des pattes de parafoudre (5") enroulées avec le couvercle d'élément (9).

4. Procédé selon la revendication 1, 2 ou 3,
**caractérisé en ce que**
l'empilement (1) ou l'enroulement comportant le couvercle d'élément (9) soudé est introduit dans un boîtier (10), après quoi le couvercle d'élément (9) est soudé au boîtier (10).

5. Procédé selon la revendication 4,
**caractérisé en ce**
**qu'**on utilise un soudage au laser pour le soudage du couvercle d'élément (9) au boîtier (10).

6. Procédé selon l'une des revendications 1 à 5,
**caractérisé en ce que**
les pattes de parafoudre (5) sont soudées pour l'agrafage à l'aide du soudage par ultrasons.

7. Procédé selon l'une des revendications 1 à 6,
**caractérisé en ce que**
les pattes de parafoudre (5") enroulées sont soudées au couvercle d'élément (9) à l'aide du soudage par ultrasons.

8. Procédé selon l'une des revendications 1 à 7,
**caractérisé en ce que**
l'agrafage des pattes de parafoudre (5) s'effectue dans le sens d'empilement (S) ou transversalement au sens d'enroulement à une hauteur approximativement centrale.
